# FASCICULE DE BREVET EUROPEEN

(11) **EP 0 800 132 B1**
(45) Date de publication et mention de la délivrance du brevet: **02.08.2000**
(21) Numéro de dépôt: 97400764.3
(22) Date de dépôt: 02.04.1997
(51) Int. Cl.: G05G 25/04, F16H 59/02, B60N 3/04

(54) **Structure d'habillage d'un levier de commande d'un système fonctionnel d'un véhicule automobile**
Bekleidung eines Bedienungshebels in einem Fahrzeug
Upholstery for control levers in cars

(30) Priorité: 05.04.1996 FR 9604357
(43) Date de publication de la demande: 08.10.1997
(73) Titulaire: ECIA - EQUIPEMENTS ET COMPOSANTS POUR L'INDUSTRIE AUTOMOBILE, F-25400 Audincourt (FR)
(72) Inventeur: Saint-Dizier, Serge, 25700 Valentigney (FR)
(74) Mandataire: Habasque, Etienne Joel Jean-François

(56) Documents cités:
- FR-A- 1 418 962
- GB-A- 225 391
- GB-A- 375 591
- GB-A- 1 325 203
- US-A- 1 589 431

## Description

La présente invention concerne une structure d'habillage d'un levier de commande d'un système fonctionnel d'un véhicule automobile.

Un tel levier peut par exemple être constitué par un levier de frein à main du véhicule ou encore pour un levier de changement des rapports de la boîte de vitesses du véhicule.

D'une manière générale, la structure d'habillage d'un tel levier comporte une pièce de structure disposée autour de celui-ci et munie d'un passage pour ce levier, cette pièce de structure comprenant une armature de support sur laquelle est disposé un garnissage comportant au moins une peau de revêtement et un soufflet d'habillage du levier.

Dans l'état de la technique, le soufflet est constitué par une pièce distincte et séparée du reste de la pièce de structure et est fixée d'une manière ou d'une autre sur celle-ci. Voir p. ex. le document GB-A-225,391.

On conçoit que ceci présente un certain nombre d'inconvénients, notamment de raccordement du soufflet à la pièce de structure.

Le but de l'invention est donc de résoudre ces problèmes.

A cet effet, l'invention a pour objet une structure d'habillage d'un levier de commande d'un système fonctionnel d'un véhicule automobile, du type comportant une pièce de structure disposée autour du levier, comportant un passage pour celui-ci et comprenant une armature de support sur laquelle est disposé un garnissage comportant au moins une peau de revêtement et un soufflet d'habillage du levier, caractérisée en ce que le levier d'habillage du levier est venu de matière avec la peau de revêtement de la pièce de structure.

L'invention sera mieux comprise à la lecture de la description qui va suivre, donnée uniquement à titre d'exemple et faite en se référant aux dessins annexés, sur lesquels :
- la Fig.1 représente une vue en coupe schématique illustrant un premier exemple de réalisation d'une structure d'habillage selon l'invention;
- la Fig.2 représente une vue en coupe schématique illustrant un second exemple de réalisation d'une structure d'habillage selon l'invention; et
- la Fig.3 représente une vue de détail d'un levier représenté sur la figure 2.

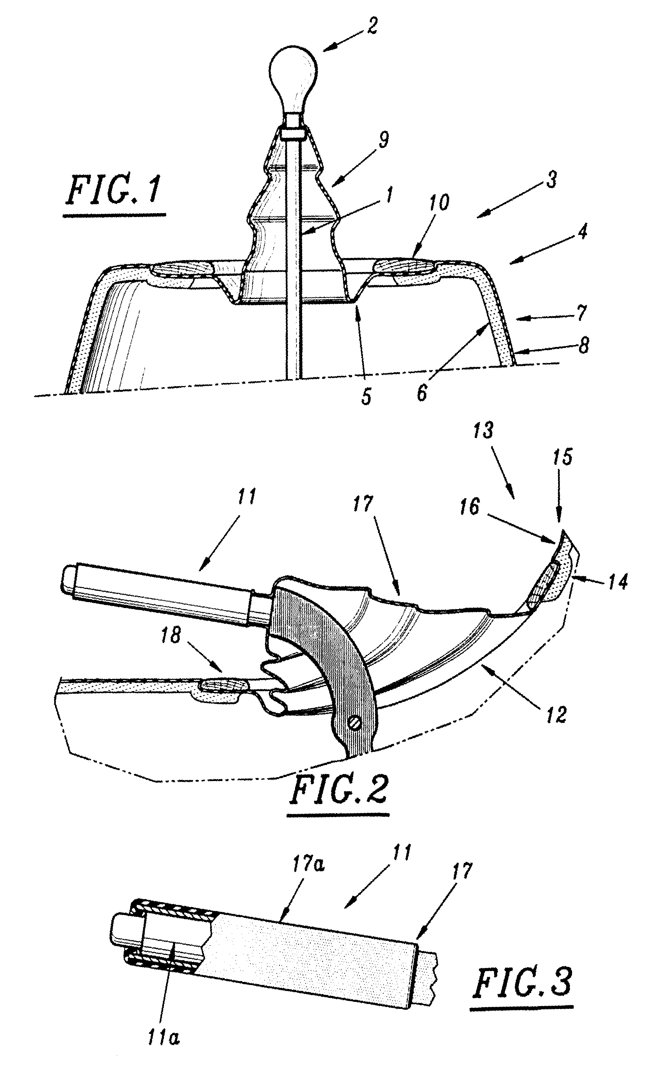

On reconnaît sur la figure 1, une structure d'habillage d'un levier de commande d'un système fonctionnel d'un véhicule automobile.

Sur cette figure, ce levier est le levier de changement de vitesses de la boîte de vitesses du véhicule et est désigné par la référence générale 1. L'une des extrémités de ce levier est reliée au reste du mécanisme de commande de la boîte de vitesses du véhicule, tandis que l'autre extrémité de celui-ci comporte par exemple une poignée désignée par la référence générale 2.

La structure d'habillage est quant à elle désignée par la référence générale 3 et comporte une pièce de structure désignée par la référence générale 4, disposée autour du levier et comportant un passage 5 pour celui-ci et comprenant une armature de support désignée par la référence générale 6, sur laquelle est disposé un garnissage désigné par la référence générale 7, comprenant au moins une peau de revêtement désignée par la référence générale 8.

De plus, un soufflet d'habillage désigné par la référence générale 9, est également prévu autour de ce levier.

Selon l'invention, ce soufflet d'habillage 9 du levier 1 est venu de matière avec la peau de revêtement 8 de la pièce de structure 4.

De façon classique, une telle peau et un tel soufflet peuvent être réalisés en matière plastique d'une seule pièce par rotomoulage.

Cette peau est ensuite disposée par exemple dans un moule de moussage permettant de former de façon classique entre cette peau et une armature de support réalisée au préalable également en matière plastique, une couche de mousse de rembourrage.

La structure d'habillage selon l'invention présente donc un certain nombre d'avantages par rapport aux structures de l'état de la technique, dans la mesure où le soufflet est venu de matière avec le peau de revêtement de la pièce de structure, ce qui permet de simplifier la réalisation de cette structure et d'améliorer son esthétique.

On notera qu'une pièce formant enjoliveur désignée par la référence générale 10 sur cette figure, peut également être disposée sur la pièce de structure 4 au niveau de la jonction entre le soufflet 9 et celle-ci.

L'accrochage de cette pièce formant d'enjoliveur sur la pièce de structure, peut être réalisé de différentes manières appropriées.

Dans l'exemple de réalisation, la pièce de structure est munie d'un ou de plusieurs épaulements en saillie formant crochet permettant de maintenir la pièce formant enjoliveur en position, par simple engagement et accrochage de celle-ci sur la pièce de structure.

Bien entendu, différents modes de réalisation de cette pièce et de ces moyens peuvent être envisagés.

Il va de soi bien entendu que le levier de commande du système fonctionnel peut être un levier autre qu'un levier de commande d'une boîte de vitesses, tel qu'un levier de frein à main du véhicule comme cela est illustré sur les figures 2 et 3.

Ce levier est désigné par la référence générale 11 sur ces figures et est disposé dans un passage 12 d'une pièce de structure 13 comportant une armature de support 14, sur laquelle est disposé un garnissage 15 muni d'une peau de revêtement 16.

Dans ce cas également, un soufflet désigné par la référence générale 17 est disposé autour du levier 11 et est venu de matière avec la peau de revêtement 16 de la pièce de structure 13.

Une pièce formant enjoliveur désignée par la référence générale 18 est également prévue sur la pièce de structure au niveau de la jonction entre le soufflet et celle-ci.

De plus, et comme cela est visible sur la figure 3, une portion 17a du soufflet 17 peut s'étendre au moins en partie autour d'une poignée de ce levier 11, cette poignée étant désignée par la référence générale 11a sur cette figure.

On conçoit que dans ce cas également, le soufflet 17 et la peau de revêtement 16 de la pièce de structure 13 peuvent être réalisés d'une seule pièce en matière plastique par rotomoulage.

Outre une plus grande facilité de réalisation et donc des coûts de fabrication moins élévés d'une telle structure d'habillage, on peut également noter une amélioration de l'esthétique de celle-ci, par rapport aux structures de l'état de la technique, dans la mesure où la peau de revêtement de la pièce de structure, le soufflet et éventuellement la portion de celui-ci disposée autour de la poignée du levier, forment un ensemble et une continuité de style.

Bien entendu, une telle structure peut être adaptée pour être disposée autour d'un levier autre qu'un levier de commande d'une boîte de vitesses ou un levier de frein à main d'un véhicule automobile.

Enfin, on notera que la peau et le soufflet peuvent être réalisés en un matériau autre que de la matière plastique.

## Revendications

1. Structure d'habillage d'un levier de commande d'un système fonctionnel d'un véhicule automobile, du type comportant une pièce de structure (4;13) disposée autour du levier (1;11), comportant un passage (5;12) pour celui-ci et comprenant une armature de support (6;14) sur laquelle est disposé un garnissage (7;15) comportant au moins une peau de revêtement (8;16) et un soufflet (9;17) d'habillage du levier, caractérisée en ce que le soufflet d'habillage (9;17) du levier (1;11) est venu de matière avec la peau de revêtement (8;16) de la pièce de structure (4;13).

2. Structure selon la revendication 1, caractérisée en ce qu'une pièce formant enjoliveur (10;18) est disposée sur la pièce de structure (4;13) au niveau de la jonction entre le soufflet et celle-ci.

3. Structure selon la revendication 1 ou 2, caractérisée en ce que le soufflet (17) comporte une portion (17a) s'étendant au moins en partie autour d'une poignée (11a) du levier (11).

4. Structure selon l'une quelconque des revendications précédentes, caractérisée en ce que le soufflet et la peau de revêtement sont réalisés d'une seule pièce en matière plastique.

5. Structure selon la revendication 4, caractérisée en ce que le soufflet et la peau de revêtement sont réalisés par rotomoulage.

## Patentansprüche

1. Verkleidungsstruktur eines Steuerhebels für ein Betätigungssystem eines Kraftfahrzeugs, aufweisend ein Strukturteil (4, 13), das um den Hebel (1; 11) angeordnet ist und einen Durchlaß (5; 12) für diesen sowie einen Träger (6; 14) umfaßt, auf welchem eine Hulle (7; 17) angeordnet ist, die zumindest eine Ummantelungsschale (8; 16) und einen Verkleidungsbalg (9; 17) für den Hebel umfaßt, dadurch gekennzeichnet, daß die Ummantelungsschale (8; 16) des Hebels (1; 11) materialeinheitlich mit der Ummantelungsschale (8; 16) des Strukturteils (4; 13) gebildet ist.

2. Struktur nach Anspruch 1, dadurch gekennzeichnet, daß ein einen Zierrahmen (10; 18) bildendes Teil auf dem Strukturteil (4; 13) auf Höhe der Verbindung zwischen dem Balg und diesem angeordnet ist.

3. Struktur nach Anspruch 1 oder 2, dadurch gekennzeichnet, daß der Balg (17) einen Abschnitt (17a) umfaßt, der sich zumindest teilweise um einen Griff (11a) des Hebels (11) erstreckt.

4. Struktur nach einem der vorangehenden Ansprüche, dadurch gekennzeichnet, daß der Balg und die Ummantelungsschale einstückig aus Kunststoff verwirklicht sind.

5. Struktur nach Anspruch 4, dadurch gekennzeichnet, daß der Verkleidungsbalg und die Verkleidungsschale durch Rotationsformen verwirklicht sind.

## Claims

1. Gaiter assembly of a control lever for a functional system of a motor vehicle, of the type comprising a structural body (4; 13) arranged around the lever (1; 11), and having an opening (5; 12) for the latter and comprising a supporting frame (6; 14) on which is mounted a trim (7; 15) comprising at least one covering skin (8; 16) and a bellows (9; 17) forming a gaiter for the lever, characterised in that the bellows (9; 17) of the gaiter for the lever (1; 11) is made of the material of the covering skin (8; 16) of the structural body (4; 13).

2. Assembly according to Claim 1, characterised in that an embellishing component (10; 18) is mounted on the structural body (4; 13) at the level of the joint between the bellows and the latter.

3. Assembly according to Claim 1 or 2, characterised in that the bellows (17) has a portion (17a) extending at least partly around a knob or handle (11a) on the lever (11).

4. Assembly according to any one of the foregoing claims, characterised in that the bellows and the covering skin are made of one piece of plastics material.

5. Assembly according to Claim 4, characterised in that the bellows and the covering skin are made by rotary moulding.
